# EUROPEAN PATENT APPLICATION

(11) **EP 1 770 553 A1**
(43) Date of publication of application: **04.04.2007**
(21) Application number: 06018322.5
(22) Date of filing: 01.09.2006
(51) Int. Cl.: G06F 17/30

(54) **Image retrieval apparatus and image retrieval program storage medium**

(30) Priority: 29.09.2005 JP 2005283205
(71) Applicant: FUJIFILM Corporation, Minato-ku Tokyo (JP)
(72) Inventor: Nakagawa, Tomohiro Fuji Photo Film Co., Ltd., Kanagawa 258-8538 (JP); Ebihara, Takayuki Fuji Photo Film Co., Ltd., Kanagawa 258-8538 (JP)
(74) Representative: Klunker . Schmitt-Nilson . Hirsch

(57) **Abstract**

An image retrieval apparatus includes: an image storage section that stores two or more photographic images and receives an access for the photographic images; an access detection section that detects an access for the photographic images stored in the image storage section; an access image analyzing section that analyzes a subject of the photographic image detected in the access by the access detection section to determine a word associated with the subject; and an image retrieval section that retrieves a photographic image associated with the word determined by the access image analyzing section, of said two or more photographic images.

## Description

### BACKGROUND OF THE INVENTION

### Field of the Invention

The present invention relates to an image retrieval apparatus for retrieving an image, and an image retrieval program storage medium storing an image retrieval program, which causes an information processing apparatus such as a computer to operate as the image retrieval apparatus.

### Description of the Related Art

Hitherto, there is widely used a digital camera for obtaining a digital photographic image through photography of a subject. Digitalizing of the photographic image makes it possible that a photofinishing laboratory prints out the photographic image and a photo studio provides such a service that a predetermined image processing is applied to the photographic image using a personal computer to correct inconvenience of the photographic image. On the other hand, in the customer side, digitalizing of the photographic image makes it possible to save a high picture quality of image for a long time. Accordingly, recently, it is general that a photographic image, which is photographed by a silver halide camera and stored in a film, is also read on an optical basis in the photofinishing laboratory and the photo studio and be subjected to the digitalization.

As digitalizing of a photographic image advances, there is utilized a print order system in which photographic images are saved in an, and personal computers and Cellular phones are used to perform a print order of the photographic image via a network. According to the print order system, for example, in the request of the publication of photographic images to a photofinishing laboratory at the time of the client's order of the photographic print, the photographic images are printed out on a digitalization basis and are saved in an image management server, so that access destinations to the photographic images saved in an image management server are informed to the client and client's friends and family that are designated by the client. The client's friends and family can inspect the photographic images saved in an image management server using personal computers and Cellular phones, and in addition can order printing of a desired photographic image from among the inspected photographic images. According to the print order system as mentioned above, the photofinishing laboratory can accept orders of printing from not only the client who order the photographic printing, but also the client's friends and family. This feature makes it possible to hasten the order. Further, in the client side, it is possible to utilize the photographic images in form of an electronic album for having the photographic images in common among the client's friends and family, and in addition it is possible to contribute to communications with people living in local areas.

With respect to the print order system, Japanese Patent Laid Open Gazette TokuKai 2003-30517 discloses a technology in which the higher quality of service is provided for the user who is higher in frequency of utilization of the print order system. In the times, such as the summer vacation and the beginning of the year and the end of the year, in which we have all kinds of ceremonies and festivities, accesses to the image management server will be concentrated and it takes a lot of time to inspect the photographic images. This would bring about a possibility that a user is dissatisfied. According to the technology disclosed in Japanese Patent Laid Open Gazette TokuKai 2003-30517, favorable treatment of an allocation amount of the network resource is given to the user who frequently utilizes the print order system, even if it is the times wherein accesses to the image management server are concentrated, and thus it is possible to suppress a disincentive to utilize the print order system.

However, according to the technology disclosed in Japanese Patent Laid Open Gazette TokuKai 2003-30517, utility value is improved for a user who is high in frequency of utilization, since high quality of service is provided. On the other hand, however, for a user who is not high in frequency of utilization, there is a possibility that quality of service is deteriorated, and thereby bringing about a disincentive to utilize the print order system.

In order to improve use desires for a wide range of users, it may be effective to provide an image which is high in an additional value such that a user has interest, for example, in such a manner that when a user orders printing of an image of a grandchild, a father's image of childhood, which lives in obscurity in the image management server and the like, can be provided. In order to implement such a print order system, however, there is a need to develop a technology of automatically retrieve an image which is interest for a user, from among many images.

### SUMMARY OF THE INVENTION

In view of the foregoing, it is an object of the present invention to provide an image retrieval apparatus capable of automatically retrieving an image which is interest for a user, and an image retrieval program storage medium storing an image retrieval program, which causes an information processing apparatus such as a computer to operate as the image retrieval apparatus.

To achieve the above-mentioned object, the present invention provides an image retrieval apparatus comprising:
an image storage section that stores two or more photographic images and receives an access for the photographic images;
an access detection section that detects an access for the photographic images stored in the image storage section;
an access image analyzing section that analyzes a subject of the photographic image detected in the access by the access detection section to determine a word associated with the subject; and
an image retrieval section that retrieves a photographic image associated with the word determined by the access image analyzing section, of said two or more photographic images.

According to the image retrieval apparatus of the present invention, when the photographic images stored in the image storage section are accessed, there is determined a word associated with the subject of the accessed photographic image, so that the photographic image associated with the determined word is retrieved from among the two or more photographic images stored in the image storage section. In personal computers, cellular phones, and databases, it happens that a large amount of photographic images, which is not used, is buried. On the other hand, according to the image retrieval apparatus of the present invention, when the photographic images stored in the image storage section are accessed, the photographic images associated with the accessed photographic image are automatically retrieved. Thus, according to the image retrieval apparatus of the present invention, it is possible to effectively utilize the buried photographic images, and thereby improving use desires for the system.

In the image retrieval apparatus according to the present invention as mentioned above, it is preferable that the image retrieval apparatus further comprises a full image analyzing section that analyzes individual subjects of said two or more photographic images to determine words associated with the individual subjects, and
the image retrieval section that retrieves, of said two or more photographic images, a photographic image in which a same word as the word determined by the access image analyzing section is determined.

According to the image retrieval apparatus of the preferred form of the present invention, there are determined words associated with individual subjects of two or more photographic images stored in the image storage section to retrieve, from among the determined words, a word which matches the word associated with the accessed photographic images. Thus, there is automatically performed the same retrieve as a case where keywords are previously set up for a large amount of photographic images stored in the image storage section, and thereby saving trouble for set up of the keywords.

To achieve the above-mentioned object, the present invention provides an image retrieval program storage medium storing an image retrieval program, which causes a computer to operate as an image retrieval apparatus when the image retrieval program is executed in the computer, the image retrieval apparatus comprising:
an image storage section that stores two or more photographic images and receives an access for the photographic images;
an access detection section that detects an access for the photographic images stored in the image storage section;
an access image analyzing section that analyzes a subject of the photographic image detected in the access by the access detection section to determine a word associated with the subject; and
an image retrieval section that retrieves a photographic image associated with the word determined by the access image analyzing section, of said two or more photographic images.

With respect to the image retrieval program storage medium of the present invention, only the basic aspects are disclosed here. It is noted, however, that the image retrieval program storage medium of the present invention include not only the basic aspects, but also various aspects corresponding to the above-mentioned aspects of the image retrieval apparatus.

With respect to the structural elements such as the access detection section constituting the image retrieval program related to the present invention, it is acceptable that function of one structural element is implemented by one program part, function of one structural element is implemented by a plurality of program parts, or alternatively functions of a plurality structural elements are implemented by one program part. Further, it is acceptable that those structural elements are executed by oneself or by instruction to another program or program parts incorporated into a computer.

It is acceptable that the image retrieval program storage medium of the present invention is a hard disk as well as a large storage capacity of storage medium, such as CD-ROM, CD-RW, and MO.

### BRIEF DESCRIPTION OF THE DRAWINGS

Fig. 1 is a view useful for understanding an example of a print order system 1 according to an embodiment of an image retrieval system of the present invention.
Fig. 2 is a hardware structural view of the computer shown in Fig. 1.
Fig. 3 is a conceptual view of a CD-ROM 401 storing a management program, a CD-ROM 402 storing a providing program, and a CD-ROM 403 storing an order program.
Fig. 4 is a functional block diagram of the print order system 1.
Fig. 5 is a flowchart useful for understanding a flow of a print order in the print order system 1.
Fig. 6 is a functional block diagram of a keyword deciding section 522.
Fig. 7 is a flowchart useful for understanding a flow of a series of processing for deciding a keyword as to an image through analysis of the image.
Fig. 8 is an explanatory view useful for understanding an analyzing process of an image.
Fig. 9 is a view showing an example of photographic images stored in the image storage section 527.
Fig. 10 is a view showing an example of an order screen displayed on the order unit 300.
Fig. 11 is a view showing an example of a photographic image displayed on the image providing apparatus 200.

### DETAILED DESCRIPTION OF PREFERRED EMBODIMENTS

Embodiments of the present invention will be described with reference to the accompanying drawings.

Originally, in a computer, an image is treated in form of image data, and the image data is stored in a file to be saved. In the following explanation, however, the image data will be simply expressed as an image for the purpose of the simple explanation.

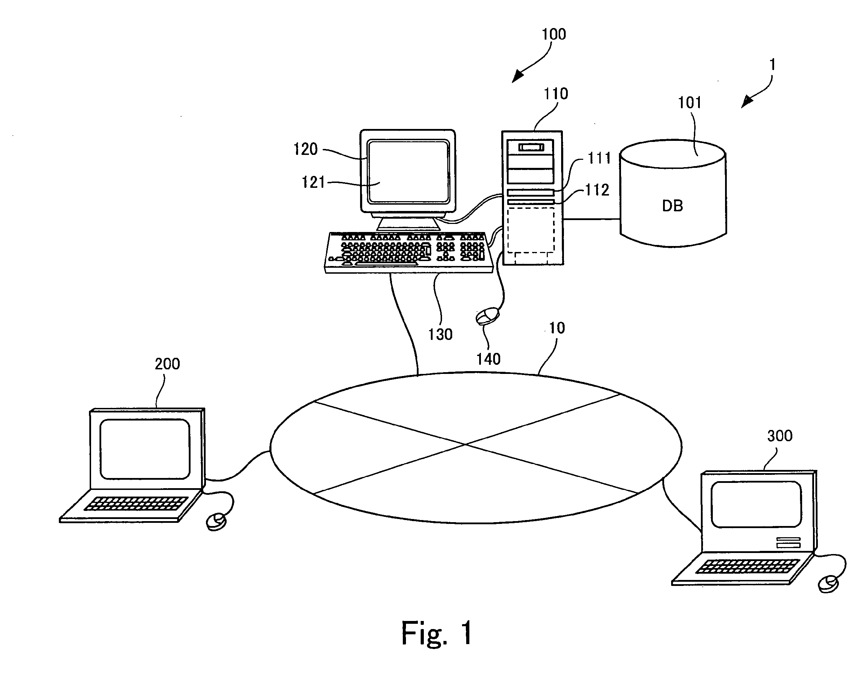

Fig. 1 is a view useful for understanding an example of a print order system 1 according to an embodiment of an image retrieval system of the present invention.

A print order system 1 comprises a first computer that constitutes an order management server 100 having a data base 101 (hereinafter it is referred to as a DB 101), a second computer that constitutes an image providing apparatus 200, and a third computer that constitutes an order apparatus 300. The order management server 100, the image providing apparatus 200, and the order apparatus 300 are mutually connected via a communication network 10. In the print order system 1, when a user orders printing of a photographic image, photographic images, which are associated with the ordered photographic image, are provided for the user who made the order of printing.

When a user of the image providing apparatus 200, that is, a provider who provides an image for the order management server 100, brings a photofinishing laboratory media and films and gives a print order for photographic images, the DB 101 stores therein photographic images stored in storage media and digital photographic images obtained through an optical reading for a film. The DB 101 further stores photographic images transmitted through the use of the image providing apparatus 200 by the provider.

The image providing apparatus 200 saves a plurality of photographic images. When an operator of the image providing apparatus 200 selects the photographic image saved in the image providing apparatus 200, the selected photographic image is transmitted to the order management server 100 and saved to the DB 101.

When a user of the order apparatus 300, that is, a client who gives a print order to the order management server 100, selects a photographic image to be printed out from among the photographic images saved in the DB 101, the print order for the selected photographic image is transmitted to the order management server 100.

The order management server 100 receives the print order for the photographic image saved in the DB 101, and makes accounting for the print order. The ordered photographic image is printed out by a printing apparatus (not illustrated), which is connected to the order management server 100, and is transmitted to the designated transmission destination.

The photographic image, which is saved in the image providing apparatus 200, is transmitted to the order management server 100 in accordance with an instruction of the provider, and is saved in the DB 101. The photographic image saved in the DB 101 may be accessed by the order management server 100 after an allowance of the access by the image providing apparatus 200. That is, the photographic image, which is saved in the image providing apparatus 200, is accessed via the DB 101 by the order management server 100, and is published for the order apparatus 300. A combination of the order management server 100 and the image providing apparatus 200 corresponds to an embodiment of an image retrieval apparatus of the present invention.

With respect to the computer constituting the order management server 100, the computer constituting the image providing apparatus 200, and the computer constituting the order apparatus 300, those computers are substantially same as one another in structure on a hardware basis, but different from one another on an operational content basis. Hereinafter there will be explained the hardware of the computer constituting the order management server 100 on behalf of those computers.

The computer constituting the order management server 100 comprises, on an external appearance, a main frame unit 110, an image display unit 120 for displaying an image on a display screen 121 in accordance with an instruction from the main frame unit 110, a keyboard 130 for inputting various sorts of information to the main frame unit 110 in accordance with a key operation, and a mouse 140 for inputting an instruction according to, for example, an icon and the like, through designation of an optional position on the display screen 121, the icon and the like being displayed on the position on the display screen 121. The main frame unit 21 has a flexible disk mounting slot 121 for mounting a flexible disk (hereinafter it is referred to as FD), and a CD-ROM mounting slot 112 for mounting a CD-ROM.

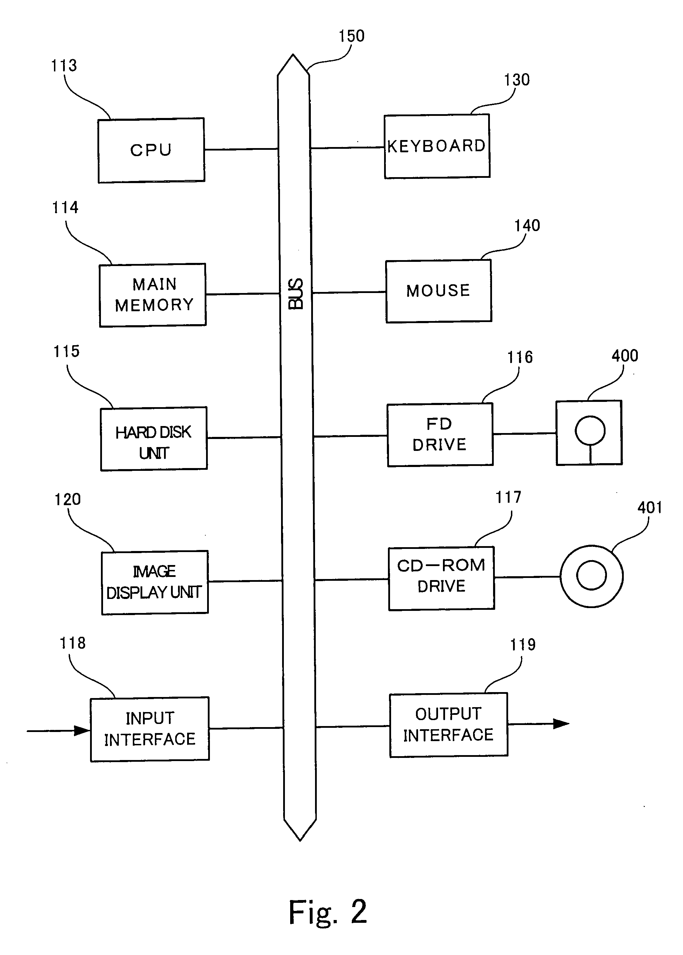

Fig. 2 is a hardware structural view of the computer shown in Fig. 1.

The main frame unit 110 comprises, as shown in Fig. 2, a CPU 113 for executing a various types of program, a main memory 114 in which a program stored in a hard disk unit 115 is read out and developed for execution by the CPU 113, the hard disk unit 115 for saving various types of programs and data, an FD drive 116 for accessing a FD 400 mounted thereon, a CD-ROM drive 117 for accessing a CD-ROM 401 mounted thereon, an input interface 118 connected to an external device, to receive images from the external device, and an output interface 119 to transmit images to the external device. These various types of elements are connected via a bus 150 to the image display unit 120, the keyboard 130 and the mouse 140. In case of the computer that constitutes the order management server 100, the hard disk unit 115 serves as the DB 101.

The CD-ROM 401 stores therein a management program for operating the order management server 100. The CD-ROM 401 is mounted on the CD-ROM drive 117 so that the management program, which is stored in the CD-ROM 401, is up-loaded on the computer and is stored in the hard disk unit 115. When the management program is activated, the computer operates as the order management server 100 that manages the print order of a photographic image.

Mounted on the computer constituting the image providing apparatus 200 is a CD-ROM 402 storing a providing program, instead of the CD-ROM 401 storing a management program. Mounted on the computer constituting the order apparatus 300, is a CD-ROM 403 storing an order program.

Here, there will be explained an example in which an image stored in the DB 101 of the order management server 100 is inspected, and an order program for performing the print order for the inspected image is especially prepared. It is noted, however, that it is acceptable that a general-purpose of image inspection software is used without the use of the order program which is especially prepared. Further, it is acceptable that the providing program for the image providing apparatus 200 is installed in the order apparatus 300.

According to the present embodiment, as storage mediums for storing the management program, the providing program, and the order program, the CD-ROM 401, CD-ROM 402 and the CD-ROM 403 are used, respectively. However, the storage mediums for storing those programs are not restricted to the CD-ROM, and it is acceptable that the storage mediums are an optical disk, MO, FD, a magnetic disk, and so on. Further, it is acceptable that the data conversion program involved in the present invention is supplied directly to the computer via the input interface 118 without any storage medium.

Next, there will be explained the management program, the providing program, and the order program.

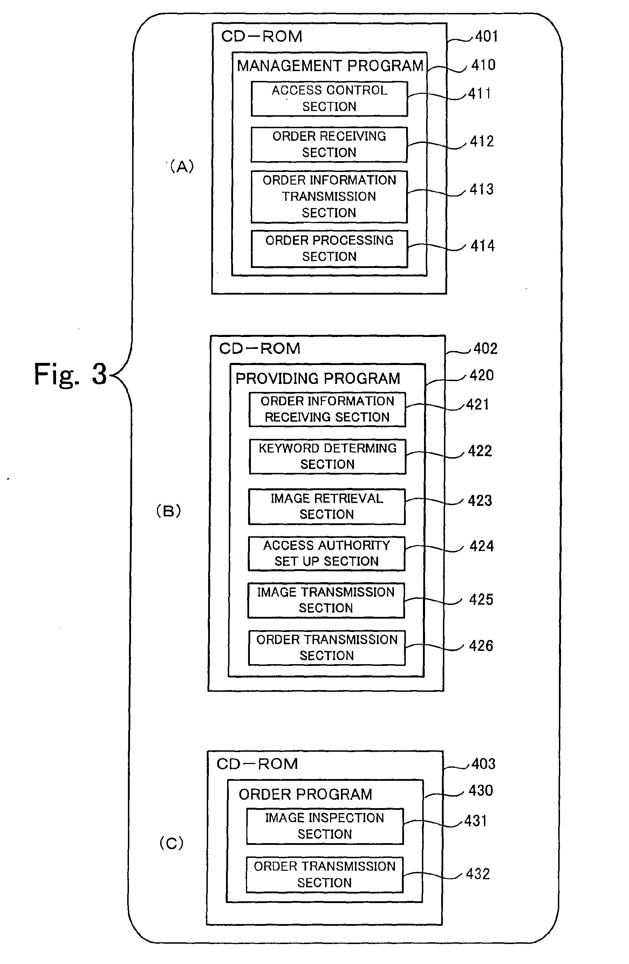

Fig. 3 is a conceptual view of the CD-ROM 401 storing the management program, the CD-ROM 402 storing the providing program, and the CD-ROM 403 storing the order program.

As shown in part (A) of Fig. 3, the management program 410 stored in the CD-ROM 401 comprises an access control section 411, an order receiving section 412, an order information transmission section 413, and an order processing section 414. As shown in part (B) of Fig. 3, the providing program 420 stored in the CD-ROM 402 comprises an order information receiving section 421, a keyword determining section 422, an image retrieval section 423, an access authority set up section 424, an image transmission section 425, and an order transmission section 426. As shown in part (C) of Fig. 3, the order program 430 stored in the CD-ROM 403 comprises an order inspection section 431 and an order transmission section 432.

Details of individual sections of the management program 410, the providing program 420 and the order program 430 will be explained in conjunction with functions of the individual sections of the order management server 100, the image providing apparatus 200, and the order apparatus 300.

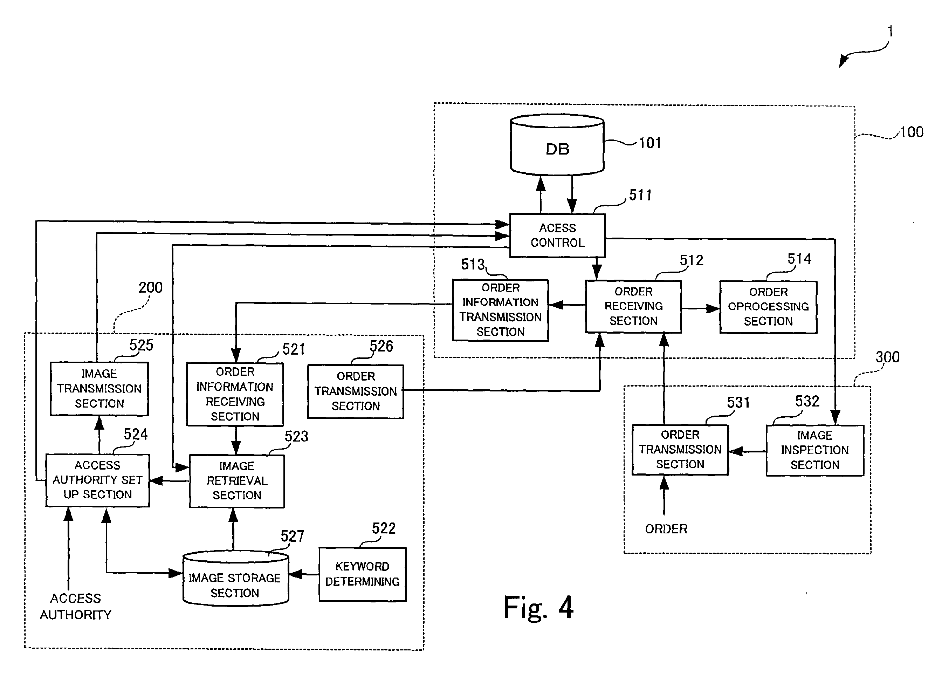

Fig. 4 is a functional block diagram of the print order system 1 which is constructed in such a manner that the management program 410 is installed in the computer constructing the order management server 100, the providing program 420 is installed in the computer constructing the image providing apparatus 200, and the order program 430 is installed in the computer constructing the order apparatus 300.

The order management server 100 comprises the DB 101 which is also shown in Fig. 1, an access control section 511, an order receiving section 512, an order information transmission section 513, and an order processing section 514. The image providing apparatus 200 comprises an order information receiving section 521, a keyword determining section 522, an image retrieval section 523, an access authority set up section 524, an image transmission section 525, an order transmission section 526, and an image storage section 527. The order apparatus 300 comprises an order transmission section 531 and an image inspection section 532.

The access control section 511, the order receiving section 512, the order information transmission section 513, and the order processing section 514, which constitute the order management server 100, correspond to the access control section 411, the order receiving section 412, the order information transmission section 413, and the order processing section 414, which constitute the management program 410 shown in the part (A) of Fig. 3, respectively. The order information receiving section 521, the keyword determining section 522, the image retrieval section 523, the access authority set up section 524, the image transmission section 525, the order transmission section 526, and the image storage section 527, which constitute the image providing apparatus 200, correspond to the order information receiving section 421, the keyword determining section 422, the image retrieval section 423, the access authority set up section 424, the image transmission section 425, and the order transmission section 426, which constitute the providing program 420 shown in the part (B) of Fig. 3, respectively. The image inspection section 532 and the order transmission section 531, which constitute the order apparatus 300, correspond to the order inspection section 431 and the order transmission section 432, which constitute the order program 430 shown in the part (C) of Fig. 3, respectively.

Individual elements shown in Fig. 4 are constructed by a combination of hardware of a computer and OS and application program which are to be executed in the computer. On the other hand, individual elements of the management program 410, the providing program 420 and the order program 430, which are shown in Fig. 3, are constructed by only the application program.

Photographic images, which are treated in the print order system 1, are each provided with a contact address of the associated provider who provides the photographic image (according to the present embodiment, it is an electronic mail address). Inherent image numbers are assigned to individual photographic images. The photographic images are classified into images which are allowed in access from the order apparatus 300, and images which are not open to the public as to the order apparatus 300. An access authority is given to the photographic image which is allowed in access.

The image inspection section 532, which constitutes the order apparatus 300 shown in Fig. 4, transmits to the order management server 100 a request of inspection of the photographic images saved in the DB 101, and causes the photographic image allowed in inspection to be displayed on the display screen of the computer constituting the order apparatus 300. A person, who operates the order apparatus 300, selects photographic images to be printed out from among the photographic images displayed on the display screen using a mouse and the like, and instructs the print order.

The order transmission section 531 of the order apparatus 300 transmits order information indicative of an image number of photographic image instructed in print order, the number of printing sheets for the photographic image, and a transmission destination for the photographic image printed out, to the order management server 100.

The keyword determining section 522, which constitutes the image providing apparatus 200, obtains the photographic image stored in the storage medium and analyzes the content of the photographic image to determine a keyword associated with the photographic image. The photographic image determined in the keyword is associated with the keyword and then stored in the image storage section 527. Upon receipt of the photographic image from the image retrieval section 523, the keyword determining section 522 analyzes the contents of the photographic image to determine the keyword, and informs the image retrieval section 523 of the determined keyword. Details of a method of determining the keyword will be described later. The keyword determining section 522 corresponds to an example of the access image analyzing section referred to in the present invention, and also corresponds to an example of the full image analyzing section referred to in the present invention.

The image storage section 527 stores a plurality of photographic images. The hard disk unit of the computer constituting the image providing apparatus 200 serves as the image storage section 527. A photographic image stored in the image storage section 527 is associated with the keyword determined in the keyword determining section 522. As mentioned above, the photographic images stored in the image storage section 527 are temporarily stored in the DB 101 of the order management server 100 and may be accessed via the DB 101 by the order apparatus 300. A combination of the image storage section 527 and the DB 101 corresponds to an example of the image storage section referred to in the present invention.

The order information receiving section 521 receives order information which is transmitted from the order apparatus 300 to the order management server 100. The order information receiving section 521 informs the image retrieval section 523 of the image number including in the order information.

With respect to the image retrieval section 523, in the event that the image storage section 527 stores the photographic image which is assigned with the image number informed from the order information receiving section 521, the image retrieval section 523 obtains the keyword which is associated with the photographic image in the image storage section 527. On the other hand, in the event that the image storage section 527 does not store the photographic image, the image retrieval section 523 obtains the photographic image from the DB 101 of the order management server 100, and informs the keyword determining section 522 of the obtained photographic image so as to obtain the keyword of the photographic image which is determined in the keyword determining section 522. The image retrieval section 523 retrieves, from among the photographic images saved in the image storage section 527, a photographic image wherein a keyword associated with the photographic image is coincident with the obtained keyword. The retrieved photographic image is displayed on the display screen of the image providing apparatus 200. The image retrieval section 523 corresponds to an example of the image retrieval section referred to in the present invention.

A person, who operates the image providing apparatus 200, may enter instructions of giving photographic images, which are displayed on the display screen of the image providing apparatus 200, the access authority, using a mouse, and cancelling the access authority. The access authority set up section 524 makes giving and cancellation of access authority for photographic images in accordance with the entered instruction. In the event that the photographic images are already stored in the DB 101 of the order management server 100, the access authority set up section 524 informs the order management server 100 of instructions of giving and cancellation of access authority.

The image transmission section 525 transmits to the order management server 100 the photographic images to which an access authority is newly applied in the access authority set up section 524.

It is possible that the image providing apparatus 200 also issues the print order for the photographic images saved in the DB 101. When a provider, who operates the image providing apparatus 200, selects a photographic image to be printed out from among the photographic images displayed on the display screen using the mouse and the like, and instructs the print order, the order transmission section 526 transmits to the order management server 100 order information indicative of an image number of photographic image instructed in print order by the provider, the number of printing sheets for the photographic image, and a transmission destination for the photographic image printed out.

The order receiving section 512, which constitutes the order management server 100, receives order information from the order apparatus 300 and the image providing apparatus 200. The order information is transmitted to the order processing section 514, and the order information transmitted from the order apparatus 300 is transmitted to the order information transmission section 513 too. As mentioned above, according to the print order system 1 of the present embodiment, not only the photographic images are inspected, but also the photographic images are subjected to the print order, and thus it is possible to newly provide for a person who makes an order photographic image associated with the photographic image. The order receiving section 512, which receives the print order, corresponds to an example of the access detecting section referred to in the present invention.

The order information transmission section 513 transfers the order information transmitted from the order apparatus 300 to a contact address of the associated provider who provides the photographic image to which the image number indicated by the order information is assigned (according to the present embodiment, it is an electronic mail address of the provider).

The access control section 511 controls an access to the photographic images which are saved in the DB 101. More in details, upon receipt of a request for inspection of the photographic images saved in the DB 101 from the order apparatus 300, the access control section 511 obtains the photographic image having the access authority from the DB 101 and provides the same for the order apparatus 300. When the access control section 511 receives a request for inspection from the image providing apparatus 200, the access control section 511 provides the image providing apparatus 200 with all the photographic images provided from the provider regardless of the existence of the access authority. When the access control section 511 receives a photographic image from the image providing apparatus 200, the access control section 511 causes the DB 101 to save the photographic image. Upon receipt of instructions for giving and cancellation of access authority for photographic images from the image providing apparatus 200, the access control section 511 makes giving and cancellation of access authority for photographic images saved in the DB 101.

The order processing section 514 gives a printing apparatus an instruction of printing out the photographic images of the image numbers indicated by the order information, and settles up a print charge for the photographic images. The photographic images printed out are transmitted to a transmission destination indicated by the order information and the special order information.

The explanation for the structure of the print order system 1 will be terminated with the above mentioned description.

Next, there will be explained a flow of the print order in the print order system 1.

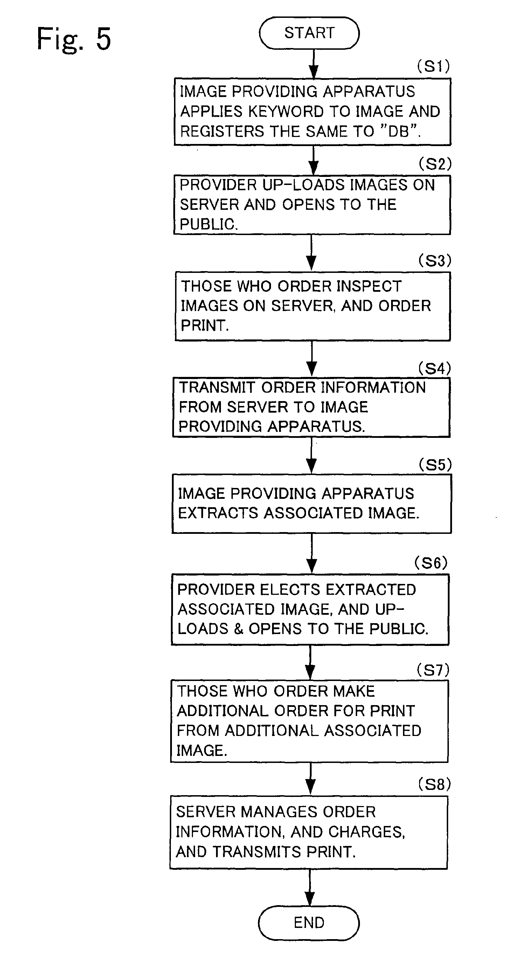

Fig. 5 is a flowchart useful for understanding a flow of a print order in the print order system 1.

For example, when a CD-ROM, which stores photographic images, is mounted on the image providing apparatus 200 and a provider gives an instruction of storing the photographic images into the image storage section 527 shown in Fig. 4, the keyword deciding section 522 obtains the photographic images stored in the CD-ROM and decides keywords associated with individual subjects of the photographic images (step S1 of Fig. 5).

Here, the explanation of Fig. 5 is interrupted, and there will be explained a method of determining the keywords by the keyword deciding section 522.

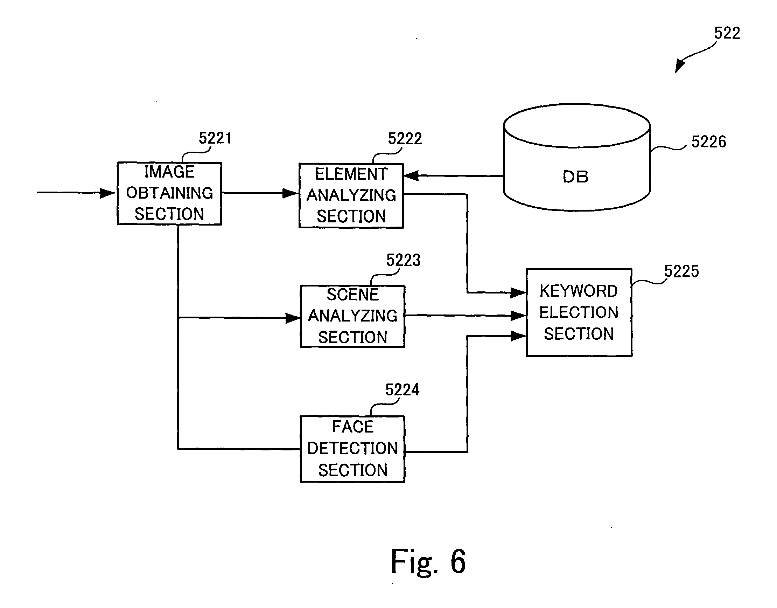

Fig. 6 is a functional block diagram of a keyword deciding section 522.

The keyword deciding section 522 comprises an image obtaining section 5221, an element analyzing section 5222, a scene analyzing section 5223, a face detecting section 5224, and a keyword electing section 5225. A data base 5226 (hereinafter it is referred to as a DB 5226) is connected to the element analyzing section 5222. The hard disk unit 115 of the image providing apparatus 200 serves as the DB 5226.

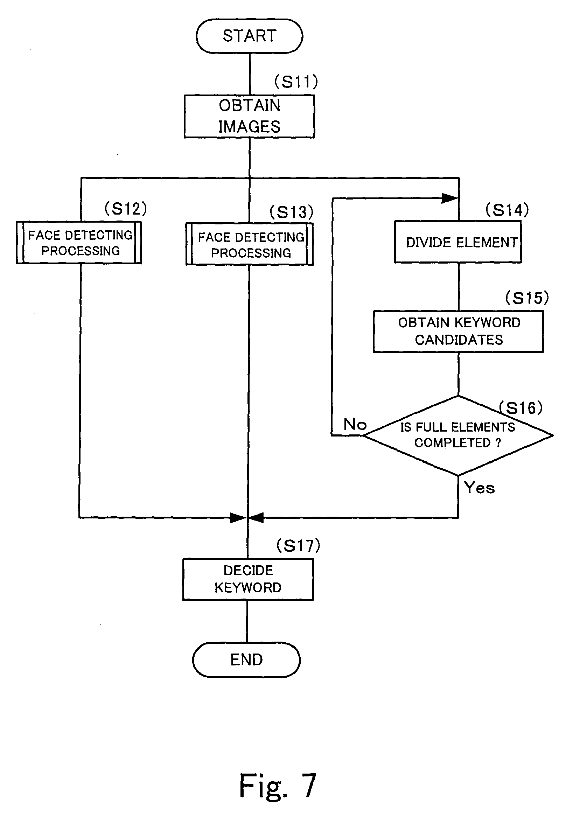

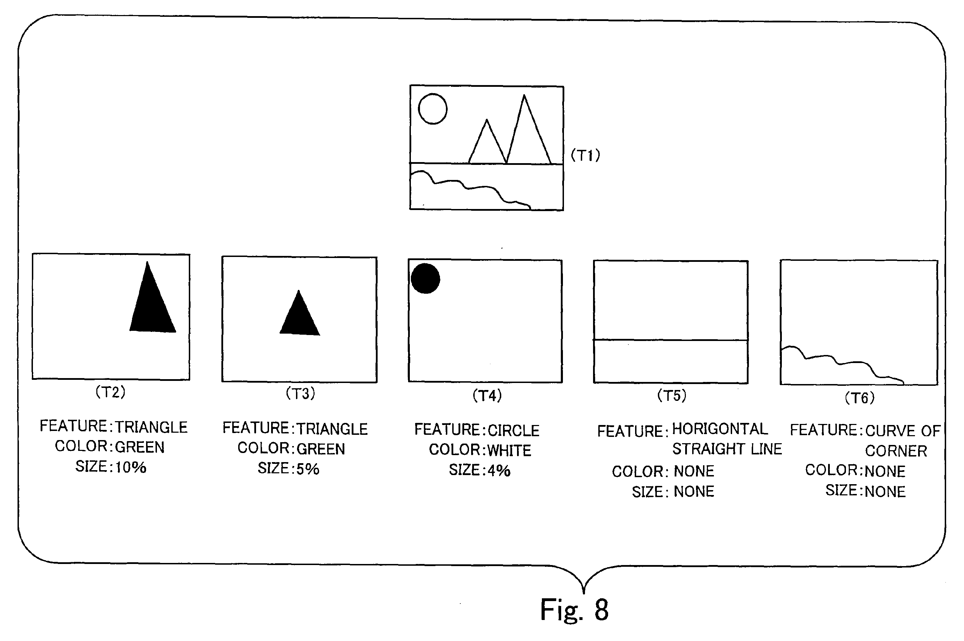

Fig. 7 is a flowchart useful for understanding a flow of a series of processing for deciding a keyword as to an image through analysis of the image. Fig. 8 is an explanatory view useful for understanding an analyzing process of an image. Hereinafter, there will be explained the present embodiment in conjunction with Fig. 7 and Fig. 8, and Fig. 6 as well.

The image obtaining section 5221 shown in Fig. 6 obtains images stored in a storage medium and the like (step S11 of Fig. 7). The thus obtained images are transmitted to the scene analyzing section 5223 and the face detecting section 5224. The image obtained in the image obtaining section 5221 is extracted in the profile line, and the extracted profile line is approximated in the figure. And colors of individual areas divided along the profile line (figure) are changed uniformly into the average color of the colors included in the areas. Thus, the image obtained in the image obtaining section 5221 is processed into an image like the figure as shown in part (T1) of Fig. 8. The processed image is transmitted to the element analyzing section 5222.

The face detecting section 5224 analyzes a component of a skin color of the image transmitted from the image obtaining section 5221 to detect a figure area including a person's face, of the image (step S12 of Fig. 7). Further, it is determined in accordance with an outline (roundness) of the detected figure's face and the shape of the mouse of the figure as to whether sex of the detected figure is man or woman, the detected figure is a child, and the detected figure is a smile face. The face detection processing, and processing of determining sex, age and expression in accordance with the detected face are well known in the art. Thus, detailed explanation will be omitted. In the event that a face of a figure is detected in the photographic image, sex of the detected figure is determined in form of a figure keyword. In the event that the detected figure is a child, the term "child" is determined in form of a figure keyword. In the event that expression of the detected figure is a smile face, the term "smile face" is determined in form of a figure keyword. According to this example, it is assumed that no figure is detected for the image shown in the part (T1) of Fig. 8.

The scene analyzing section 5223 analyzes color-phase of an image transmitted from the image obtaining section 5221 to analyze the scene of the image (step S13 of Fig. 7). As to the scene analysis, it is possible to apply the technology disclosed in Japanese Patent Laid Open Gazette TokuKai 2004-62605, and it is well known. Thus, detailed explanation will be omitted. According to this example, it is assumed that photographic scene and possibility for the image shown in the part (T1) of Fig. 8 are analyzed to be "daytime: 80%" and "outdoor: 70%". An analyzing result of the photographic scene is transmitted to the keyword electing section 5225.

The element analyzing section 5222 obtains the keyword candidate associated with the image transmitted from the image obtaining section 5221.

First, the profile line, which is approximated in the figure in the step S11 of Fig. 7, is used to recognize a plurality of divisional elements from the image (step S14 of Fig. 7). According to this example, from the image shown in the part (T1) of Fig. 8, there are recognized five divisional elements shown in part (T2), part (T3), part (T4), part (T5), and part (T6).

The DB 5226 previously stores an association table of characteristics of elements constituting the image with words (keyword candidates) representative of candidates of objects having the characteristics.

Table 1 is an example of the association table stored in the DB 5226.

**Table 1**

| FEATURE | TYPES | | KEYWORD CONDIDATES | DISTINCTIVE COLORS |
|---|---|---|---|---|
| TRIANGLE | NATURE | LAND | MOUNTAIN | GREEN. |
| | BUILDING | | PYRAMID | LIGHT BROWN |
| | FOOD | | ONIGIRI | WHITE, BLACK |
| CIRCLE | NATURE | SKY | THE MOON | WHITE, YELLOW, ORANGE |
| | ARTIFICIA L THING | SMALL ARTICLES | COIN | GOLD, SILVER, COPPER |
| | | DECORATION | BUTTON | INDIVIDUAL COLORS |
| | | INDOOR | WALL HANGING CLOCK | INDIVIDUAL COLORS |
| | FACE | | EYES | BLACK, BLUE |
| | | | NOSE | SKIN COLOR |
| HORIZONTAL STRAIGHT LINE | NATURE | LAND | THE HORIZON | - |
| | | SEA | A HORIZONTAL LINE | - |
| | ARTIFICIAL THING | INDOOR, OUTDOOR | PARTITION | - |
| | | INDOOR | DESK | - |
| CURVE OF CORNER | NATURE | SEA | COASTLINE | - |
| | ARTIFICIAL THING | INDOOR | SHADOW OF BEDDING | - |
| | ANIMAL | | SHADOW OF ANIMAL | - |
| • • • | • • • | • • • | • • • | • • • |

The association table shown in Table 1 is prepared by a user beforehand. According to the association table shown in Table 1, features (a triangle, a circle, a horizontal straight line, a curve of corner, ...) of elements constituting an image are associated with keyword candidates (a mountain, a pyramid, "ONIGIRI", ...) of which individual features remind one, and distinctive colors (green, ocher, ...) of objects represented by the individual keyword candidates. The keyword candidate is classified into two or more types (nature-land, nature-sky, nature-sea, building, food ...) by each feature. For example, according to this example shown in Table 1, a feature "triangle" is associated with the keyword candidates, such as "a mountain", "a pyramid", and "ONIGIRI", of which the feature reminds a user. Further, the user determines colors and types of objects represented by individual keyword candidates, so that the association table shown in Table 1 is created. According to table 1: the keyword candidate of "a mountain", which is classified into the type of "nature-land", is associated with the feature of "triangle" together with the distinctive color "green"; the keyword candidate of "a pyramid", which is classified into the type of "a building", is associated with the feature of "triangle" together with the distinctive color "ocher"; and the keyword candidate of "ONIGIRI", which is classified into the type of "food", is associated with the feature of "triangle" together with the distinctive color "white" and "black". Actually, the association table includes not only individual items shown in Table 1, but also for example, features such as "square", "a vertical straight line", and "a ring-shaped curve", and the keyword candidates associated with those features.

When a plurality of divisional elements is recognized form the image, there are obtained keyword candidates associated with the features of the divisional elements by each divisional element (step S15 of Fig. 7). The keyword candidates are obtained as follows.

First, a size of the divisional elements is analyzed by each divisional element, and there are obtained diagrammatical feature and color of the divisional element. At that time, in the event that the size of the divisional element is less than a predetermined size, it is considered that the object represented by the divisional element is not important. Thus, an obtaining of the keyword for the divisional element is stopped. According to this example, it is assumed that:
as to the divisional element shown in part (T2) of Fig. 8, the diagrammatical feature, the size, and color are analyzed to be "a triangle", "10%", and "green", respectively;
as to the divisional element shown in part (T3) of Fig. 8, the diagrammatical feature, the size, and color are analyzed to be "a triangle", "5%", and "green", respectively;
as to the divisional element shown in part (T4) of Fig. 8, the diagrammatical feature, the size, and color are analyzed to be "a circle", "4%", and "white", respectively;
as to the divisional element shown in part (T5) of Fig. 8, the diagrammatical feature, the size, and color are analyzed to be "a horizontal straight line", "off the subject", and "off the subject", respectively; and
as to the divisional element shown in part (T6) of Fig. 8, the diagrammatical feature, the size, and color are analyzed to be "a curve of corner", "off the subject", and "off the subject", respectively.

Next, for each divisional element, there is retrieved, from a column of "feature of element" of the association table of Table 1 stored in the DB 5226, a feature which matches a diagrammatical feature of the individual divisional element, and there is obtained a keyword candidate associated with the retrieved feature.

Table 2 is a table in which parts associated with the keyword candidate obtained by each divisional element are extracted from the association table of Table 1.

**Table 2**

| DIVIDUAL ELEMENTS | TYPES | | KEYWORD CONDIDATES | DISTINCTIVE COLORS |
|---|---|---|---|---|
| T 2 | NATURE | LAND | MOUNTAIN | GREEN |
| | BUILDING | | PYRAMID | LIGHT BROWN |
| | FOOD | | ONIGIRI | WHITE, BLACK |
| T 3 | NATURE | LAND | MOUNTAIN | GREEN |
| | BUILDING | | PYRAMID | LIGHT BROWN |
| | FOOD | | ONIGIRI | WHITE, BLACK |
| T 4 | NATURE | SKY | THE MOON | WHITE, YELLOW, ORANGE |
| | ARTIFICIAL THING | SMALL ARTICLES | COIN | GOLD, SILVER, COPPER |
| | | DECORATION | BUTTON | INDIVIDUAL COLORS |
| | | INDOOR | WALL HANGING CLOCK | INDIVIDUAL COLORS |
| | FACE | | EYES | BLACK, BLUE |
| | | | NOSE | SKIN COLOR |
| T 5 | NATURE | LAND | THE HORIZON | - |
| | | SEA | A HORIZONTAL LINE | - |
| | ARTIFICIAL THING | INDOOR, OUTDOOR | PARTITION | - |
| | | INDOOR | DESK | |
| T 6 | NATURE | SEA | COASTLINE | - |
| | ARTIFICIAL THING | INDOOR | SHADOW OF BEDDING | - |
| | ANIMALS | | SHADOW OF ANIMAL | - |

As shown in Table 2, regarding the divisional element shown in part (T2) of Fig. 8, the diagrammatical feature is "a triangle", and thus a portion associated with "feature of element: triangle" of the association table of Table 1 is extracted. Also regarding the divisional element shown in part (T3) of Fig. 8, the diagrammatical feature is "a triangle", and thus a portion associated with "feature of element: a triangle" of the association table of Table 1 is extracted. Regarding the divisional element shown in part (T4) of Fig. 8, a portion associated with "feature of element: a circle" of the association table of Table 1 is extracted. Regarding the divisional element shown in part (T5) of Fig. 8, a portion associated with "feature of element: a horizontal straight line" of the association table of Table 1 is extracted. Regarding the divisional element shown in part (T6) of Fig. 8, a portion associated with "feature of element: a curve of a corner" of the association table of Table 1 is extracted.

As mentioned above, an image is divided into a plurality of divisional elements (step S14 of Fig. 7), a keyword candidate for the individual divisional element is obtained (step S15 of Fig. 7), and processing of extracting Table 2 from Table 1 is applied to the image in its entirety (step S16 of Fig. 7). When the processing of extracting Table 2 on the image in its entirety is completed (step S16 of Fig. 7: Yes), the extracted contents of Table 2 are transmitted to the keyword electing section 5225.

The keyword electing section 5225 determines, from among the keyword candidates shown in Table 2, a keyword candidate suitable for a photographic scene transmitted from the scene analyzing section 5223, as a keyword of the image (step S17 of Fig. 7). The keyword is elected from the keyword candidates in a manner as set forth below.

To elect the keyword, a user is assuming two or more scenes for photography of the image beforehand. On each of two or more scenes, there is established the order of priority as to adaptability of "type" shown in Table 1. For example, on the scene of "outdoor (nature-land)", there is established the order of priority of (1) "type: nature-land", (2) "type: nature-sea", and (3) "type: animal". On the scene of "outdoor (nature-building)", there is established the order of priority of (1) "type: building", (2) "type: nature-land", and (3) "type: animal". On the scene of "indoor", there is established the order of priority of (1) "type: artificial thing", (2) "type: food", and (3) "type: artificial thing-other than indoor".

The keyword electing section 5225 obtains, by each scene as mentioned above, keyword candidates shown in Table 2 from the one with a high priority level sequentially one by one on individual divisional elements, and establishes the thus obtained keyword candidates in form of the keyword in individual scenes. In the event that the face detecting section 5224 detects that the image includes the figure, the keyword electing section 5225 determines as to what divisional element includes the figure in accordance with information of the figure area transmitted from the face detecting section 5224, so that the keyword of the image on the divisional element that is determined as including the figure is altered into the figure keyword determined in the step S13.

Table 3 is a table showing keywords in which keyword candidates are corrected and arranged for each scene.

**Table 3**

| SCENE | KEYWORD CONDIDATES |
|---|---|
| OUTDOOR (NATURE) | MOUNTAIN, THE MOON, THE HORIZON, COASTLINE |
| OUTDOOR (BUILDING+NATURE) | PYRAMID, THE MOON, THE HORIZON, SHADOW OF ANIMAL |
| INDOOR | "ONIGIRI", WALL HANGING CLOCK, DESK, SHADOW OF BEDDING |
| • • • | • • • |

In Table 3: as the keyword candidates on the scene "outdoor (nature-land)", there are shown "mountain", "the moon", "the horizon", and "coastline"; as the keyword candidates on the scene "outdoor (buildirig-nature)", there are shown "pyramid", "the moon", "the horizon", "shadow of animal"; and as the keyword candidates on the scene "indoor", there are shown "ONIGIRI", "wall hanging clock", "desk", "shadow of bedding". It is acceptable to additionally prepare, for example, the scene "outdoor (nature-sea)" which takes precedence the keyword candidates related to the sea such as "the horizon" and "coastline".

When the keywords are arranged by each scene, of the scenes, one, which is adapted to the color of individual divisional elements and the photographic scene analyzed by the scene analyzing section 5223, is decided, and the keyword on the decided scene is elected as the keyword on the image. According to this example, in the step S13 of Fig. 7, it is analyzed that the photographic scene and its possibility are analyzed to be "daytime: 80%" and "outdoor: 70%". Thus, the scene "indoor" is not adapted for the photographic scene. Further, both the colors of the divisional elements shown in the part (T2) and the part (T3) of Fig. 8 are "green", but on the scene "outdoor (nature-land)", the distinctive color of the keyword "mountain" on the divisional element is "green", and on the scene "outdoor (building-nature)", the distinctive color of the keyword "pyramid" on the divisional element is "ocher". Accordingly, it is decided that the scene "outdoor (nature-land)" is exceedingly adapted for the photographic scene. As a result, the keywords "mountain", "the moon", "the horizon", and "coastline" on the scene "outdoor (nature-land)" are elected as the keyword of the image. The elected keyword is associated with the image and is saved in the data base.

Thus, according to the image providing apparatus 200 of the present embodiment, it is possible to automatically elect the keyword in accordance with the image, and thereby saving labor for manually applying the keyword to the image.

Now, returning to Fig. 5 to continue the explanation.

The keyword, which is decided in the keyword deciding section 522, is associated with the photographic image and then stored in the image storage section 527. Storage of the photographic images and the keywords in the image storage section 527 makes it possible to save such useless processing that the keyword is repeatedly determined for the same the photographic image in the image retrieval in the step S5.

When a provider operates the image providing apparatus 200 to select, from among the photographic images stored in the image storage section 527, the photographic image which is permitted in access for those who order, discrimination information of the selected photographic image is transmitted to the access authority set up section 524.

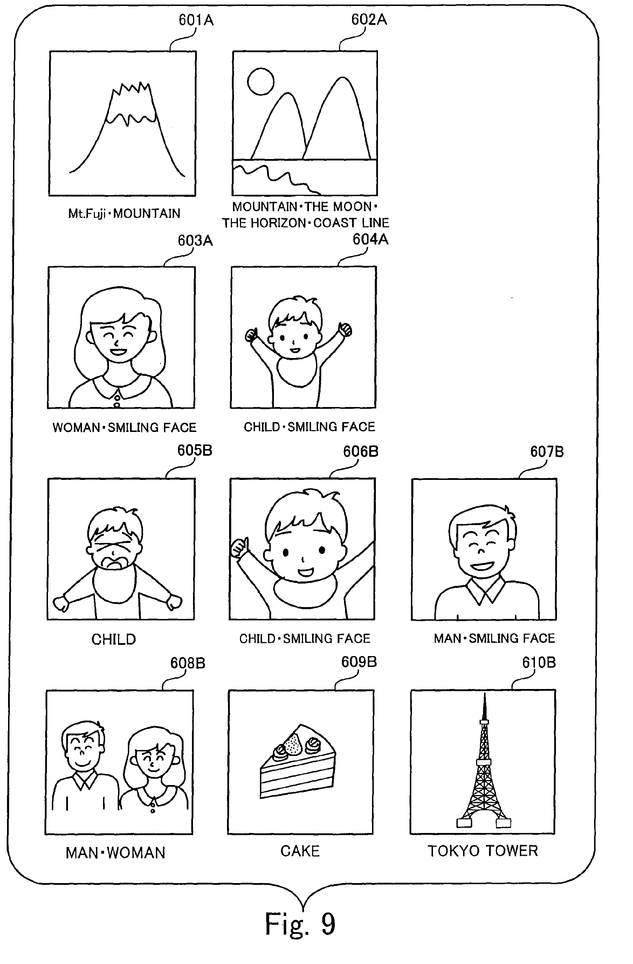

Fig. 9 is a view showing an example of photographic images stored in the image storage section 527.

It is assumed that the image storage section 527 stores, for example, ten sheets of photographic image, which are associated with the keyword by the keyword deciding section 522. According to this example, of the photographic images shown in Fig. 9, there are selected first photographic image 601A associated with the keywords "Mt. Fuji" and "mountain", second photographic image 602A associated with the keywords "mountain", "moon", "horizon", and "coastline", third photographic image 603A associated with the keywords "woman" and "smiling face", and fourth photographic image 604A associated with the keywords "child" and "smiling face".

The access authority set up section 524 applies the access authority indicated by the transmitted discrimination information, so that the photographic image, which is given with right of access, is transmitted from the image transmission section 525 to the order management server 100 and is saved into the DB 101. With respect to the photographic images saved in the DB 101 of the order management server 100, the access authority set up section 524 of the image providing apparatus 200 issues instructions for access authority to the access control section 511 of the order management server 100, so that the access authority is given to the photographic images saved in the DB 101. According to this example, the access authority is given to four photographic images 601A, 602A, 603A, and 604A, so that the photographic images 601A, 602A, 603A, and 604A can be inspected from the order apparatus 300 and thereby being open to the public to the order apparatus 300 (step S2 of Fig. 5). Hereinafter, the photographic image ("A" is fixed to the end of the figure) from which the access authority is given and the photographic image not given ("B" is fixed to the end of the figure) are distinguished according to the sign of the end of the figure fixed to the photographic image, at the time of the step S2.

When a person who orders operates the order apparatus 300 to instruct an inspection of the photographic image, the image inspection section 532 shown in Fig. 4 informs the order management server 100 of a request of access to the photographic images saved in the DB 101.

The access control section 511 of the order management server 100 permits the access to the photographic image having the access authority, of the photographic images saved in the DB 101.

The image order inspection section 532 of the order apparatus 300 causes the photographic images 601A, 602A, 603A, and 604A, which are permitted in inspection, to be displayed on the screen of the order apparatus 300.

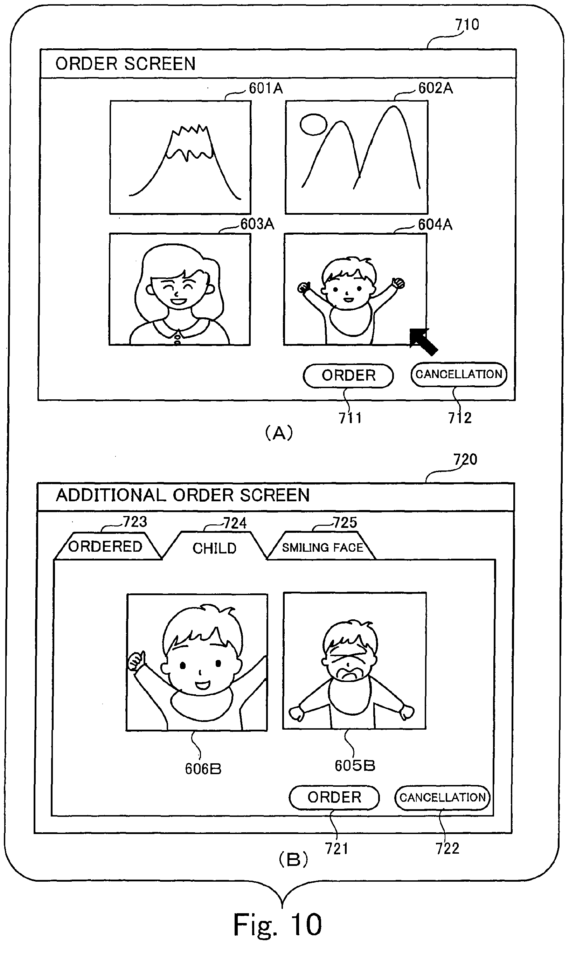

Fig. 10 is a view showing an example of an order screen displayed on the order unit 300.

Four the photographic images 601A, 602A, 603A, and 604A, which are permitted by the provider in inspection, are displayed on an order screen 710 shown in part (A) of Fig. 10. On the order screen 710, there are prepared an order button 711 for instructing a print order for the photographic images 601A, 602A, 603A, and 604A, and a cancel button 712 for instructing cancel of the order.

A person who orders confirms the displayed photographic images and selects one's wished photographic image using a mouse and the like. According to this example, it is assumed that the fourth photographic image 604A shown at the lower right of the screen is selected. The order transmission section 531 transmits to the order management server 100 the order information including the image number of the fourth photographic image 604A instructed in print order by a person who orders, the number of sheets of print, a transmission destination for the printed photographic images, and an electronic mail address of the order apparatus 300 (step S3 of Fig. 5).

The order receiving section 512 of the order management server 100 receives the order information from the order apparatus 300 and transmits the order information to the order processing section 514 and the order information transmission section 513. The order information transmission section 513 transfers the order information to address (the electronic mail address of the provider) of the ordered photographic images (step S4 of Fig. 5).

The order information receiving section 521 of the image providing apparatus 200 receives the order information via a mail server (not illustrated) and transmits the order information to the image retrieval section 523. The image retrieval section 523 retrieves, from among the photographic images stored in the image storage section 527, photographic images related to the photographic images to which the image numbers indicated by the order information are assigned (step S5 of Fig. 5).

First, there is obtained a keyword associated with the ordered photographic image. According to this example, of the photographic images shown in Fig. 9, the fourth photographic image 604A is ordered. Thus, there are obtained the keywords "child" and "smiling face" which are associated with the photographic image 604A.

Next, from among the keywords associated with the photographic image shown in Fig. 9, there is retrieved one which matches either the obtained keyword "child" or "smiling face", and is obtained the photographic image associated with the retrieved keyword. According to this example, for the obtained keyword "child", there are obtained the fifth photographic image 605B associated with keyword "child", and the sixth photographic image 606B associated with keywords "child" and "smiling face", and for the obtained keyword "smiling face", there are obtained the third photographic image 603A associated with keyword "woman" and "smiling face", the sixth photographic image 606B associated with keywords "child" and "smiling face", and the seventh photographic image 607B associated with keyword "man" and "smiling face". Of four the photographic images 603A, 605B, 606B, and 607B, which are retrieved by the image retrieval section 523, three the photographic images 605B, 606B, and 607B, which have no access authority, are displayed on the display screen of the image providing apparatus 200.

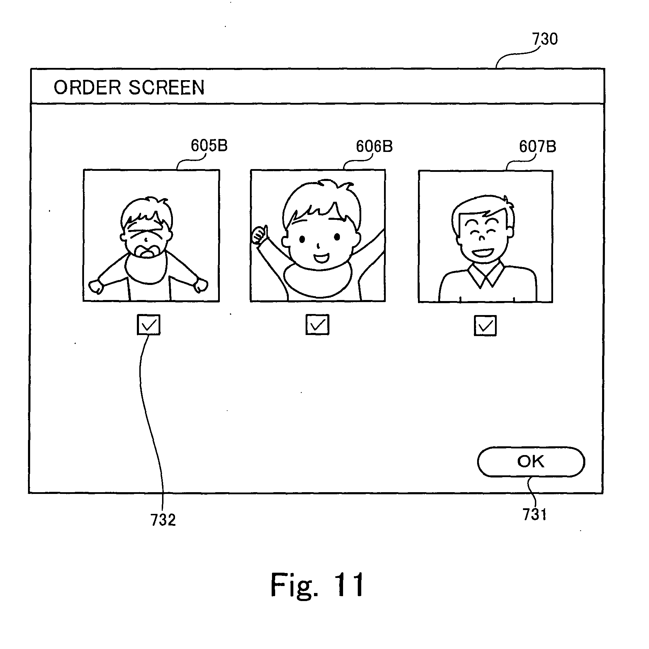

Fig. 11 is a view showing an example of a photographic image displayed on the image providing apparatus 200.

Of the photographic images 603A, 605B, 606B, and 607B, which are retrieved by the image retrieval section 523, three the photographic images 605B, 606B, and 607B, which have no access authority, are displayed on a permission screen 730 shown in Fig. 11. The permission screen 730 prepares check boxes 732 for permitting giving of access authority to the individual photographic images, and an OK button 731 for determining the permission.

The provider confirms the displayed photographic images 605B, 606B, and 607B, and uses the mouse of the image providing apparatus 200 to enter a check into the check box 732 of the photographic image permitted in giving of the access authority, of the photographic images 605B, 606B, and 607B. According to this example, it is assumed that all the photographic images 605B, 606B, and 607B are permitted in giving of the access authority.

The access authority set up section 524 gives the access authority to the photographic images 605B, 606B, and 607B permitted in giving of the access authority by the provider. The photographic images 605B, 606B, and 607B, which are given with the access authority, are transmitted from the image transmission section 525 to the order management server 100.

The photographic images 605B, 606B, and 607B, which are transmitted to the order management server 100, are subjected to the same processing as the step S2, stored in the DB 101, and open to the public as to the order apparatus 300 (step S6 of Fig. 7).

In accordance with the instruction of a person who orders, the same processing as the step S3 is carried out, so that three the photographic images 605B, 606B, and 607B, which are newly open to the public in the step S6, are displayed on the display screen of the order apparatus 300.

A part (B) of Fig. 10 shows an additional order screen displayed on the order apparatus 300.

On an additional order screen 720 shown in the part (B) of Fig. 10, there are displayed an order switch 721 for making an additional order for the ordered photographic images, photographic images which are newly open to the public, and photographic images, and a cancel switch 722 for cancelling the order. The displayed photographic images are classified to the ordered photographic image, the photographic image "child" which is newly open to the public, and the photographic image "smiling face" which is newly open to the public.
According to this example: when an ordered folder 723 is selected by the mouse and the like, there is displayed the fourth photographic image 604A associated with "child" and "smiling face", which is ordered in the step S3; when a child folder 724 is selected, there is displayed the photographic images 606B and 605B associated with the keyword "child", of the photographic images newly open to the public; and when a smile folder 725 is selected, there is displayed the photographic images 606B and 607B associated with the keyword "smiling face", of the photographic images newly open to the public.

The photographic images 605B, 606B, and 607B, which are newly open to the public, are images related to the photographic image 604A print-ordered by a person who orders. Accordingly, it is assumed that the photographic images 605B, 606B, and 607B meet a plan of the person who orders, and thus it is possible to expect that the person who orders makes an additional print order. When the person who orders instructs the print order, order information indicative of the print order for the photographic image 602A is transmitted to the order management server 100 (step S7 of Fig. 5).

The order processing section 514 transmits to the printing apparatus an instruction for printing out photographic images of the image numbers indicated by order information and additional order information transmitted from the order apparatus 300, and causes the printing apparatus to prints out the photographic images. The thus printed out photographic images are transmitted to the address of the person who orders indicated by the order information. The order processing section 514 charges the person who orders for the print price in accordance with the order information and the additional order information (step S8 of Fig. 5).

Thus, according to the print order system 1 of the present embodiment, when the person who orders makes the print order, photographic images related to the photographic images of the print order are automatically retrieved, and the retrieved photographic images are newly open to the public. Accordingly, the desire that those who order try to use the print order system 1 can be improved. And in addition, it is possible for the order management server 100 to expect an increment of the print order.

According to the present embodiment as mentioned above, the image retrieval apparatus comprises the order management server 100 and the image providing apparatus 200. It is acceptable, however, that an image retrieval apparatus of the present invention comprises a single personal computer and the like.

Further, according to the present embodiment as mentioned above, as the image retrieval apparatus referred to in the present invention, there is applied a personal computer. It is acceptable, however, that an image retrieval apparatus referred to in the present invention is cellular phones.

Furthermore, according to the present embodiment as mentioned above, photographic images related to the photographic image of the print order are newly provided. However, it is acceptable that the access detection section of the present invention detects the inspected photographic image. In the event that the inspected photographic image is detected, and the photographic images related to the inspected photographic image are retrieved, for example, an inspection of a desired photographic image stored in the database and the like makes it possible to readily detect the photographic images related to the inspected photographic image from among the photographic images that have been buried in one's own personal computer.

According to the present invention, it is possible to automatically retrieve interesting images for a user.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. An image retrieval apparatus comprising:
an image storage section that stores two or more photographic images and receives an access for the photographic images;
an access detection section that detects an access for the photographic images stored in the image storage section;
an access image analyzing section that analyzes a subject of the photographic image detected in the access by the access detection section to determine a word associated with the subject; and
an image retrieval section that retrieves a photographic image associated with the word determined by the access image analyzing section, of said two or more photographic images.

2. An image retrieval apparatus according to claim 1, wherein the image retrieval apparatus further comprises a full image analyzing section that analyzes individual subjects of said two or more photographic images to determine words associated with the individual subjects, and
the image retrieval section that retrieves, of said two or more photographic images, a photographic image in which a same word as the word determined by the access image analyzing section is determined.

3. An image retrieval program storage medium storing an image retrieval program, which causes a computer to operate as an image retrieval apparatus when the image retrieval program is executed in the computer, the image retrieval apparatus comprising:
an image storage section that stores two or more photographic images and receives an access for the photographic images;
an access detection section that detects an access for the photographic images stored in the image storage section;
an access image analyzing section that analyzes a subject of the photographic image detected in the access by the access detection section to determine a word associated with the subject; and
an image retrieval section that retrieves a photographic image associated with the word determined by the access image analyzing section, of said two or more photographic images.
